# EUROPEAN PATENT APPLICATION

(11) **EP 4 775 425 A1**
(43) Date of publication of application: **15.07.2026**
(21) Application number: 25151524.3
(22) Date of filing: 13.01.2025
(51) Int. Cl.: B60K 17/16, B60K 1/00, F16H 48/10

(54) **GEARING FOR A VEHICLE**

(71) Applicant: ZF Friedrichshafen AG, 88046 Friedrichshafen (DE)
(72) Inventor: Xu, Wenyuan, Shanghai, 201615 (CN); Song, Lei, Shanghai, 201615 (CN); Liu, Song, Shanghai, 201615 (CN); Du, Wendi, Shanghai, 201615 (CN)
(74) Representative: WBH Wachenhausen Patentanwälte PartG mbB

(57) **Abstract**

The invention relates to a gearing for a vehicle. The gearing comprises two planetary gear sets and a driven shaft for receiving power from a driving unit. An input shaft is configured to receive power from the driven shaft. A first planetary gear set is connected to a first output shaft for outputting power to a first drive shaft. The first planetary gear set is connected to a second planetary gear set. An element of the second planetary gear set is non-rotatably connected to a stationary member. The second planetary gear set is connected to a second output shaft for outputting power to a second drive shaft. A reduction unit is arranged in a power flow from the driving unit to the first and second drive shafts for converting an input rotational speed to a lower output rotational speed.

## Description

### Technical Field

The present disclosure refers to a gearing for a vehicle. The present disclosure also relates to a drive axle with such a gearing, and to a vehicle with such a gearing or such a drive axle.

### Prior art

Gearings for vehicles are known. In some cases, the gearing may comprise two planetary gear sets for converting an input rotational speed into a lower rotational speed and for providing a differential function. However, for some use cases it may be necessary to provide a greater reduction ratio than what can be achieved with the two planetary gear sets in an available space.

### Summary of the invention

The present disclosure relates in a first aspect to a gearing for a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The vehicle comprises a driving unit. The driving unit may be configured for directly or indirectly driving the gearing by applying power thereto. The driving unit may comprise an internal combustion engine and/or an electric motor. The driving unit may receive energy from an energy storage, for example a tank or a battery, and convert it to rotational mechanical energy, for example to a driving power for the gearing.

The gearing comprises a first planetary gear set and a second planetary gear set. The first planetary gear set comprises at least a first element, a second element and a third element and the second planetary gear set comprises at least a first element, a second element and a third element. The first, second and third elements, for example, may each be a sun gear, a planetary carrier or a ring gear of the respective planetary gear set. In one example, each first element of the planetary gear sets may be a sun gear, each second element of the planetary gear sets may be a planetary carrier and each third element of the planetary gear sets may be a ring gear. The ring gear of the first planetary gear set may be formed integrally with the sun gear of the second planetary gear set. Thereby, a gearing with compact dimensions can be provided. In another example, the third element of the first planetary gear set and the first element of the second planetary gear set may be sun gears, each second element of the first and second planetary gear sets may be a planetary carrier, and the first element of the first planetary gear set and the third element of the second planetary gear set may be ring gears. The respective planetary gear set may be a plus or a minus planetary gear set. Each of the planetary gear sets may have planet gears that may be rotatably mounted on the respective planetary carrier of the respective planetary gear set, for example via planetary pins. The planet gears may mesh with both the sun gear and the ring gear of the respective planetary gear set.

The gearing further comprises a driven shaft for receiving power from the driving unit and an input shaft. The driven shaft may be operatively connected to the driving unit. If two elements are operatively connected, the elements are directly or indirectly coupled to each other so that a movement of one element causes a reaction of the other element. An operative connection can be established, for example, by frictional engagement or geometric fit. The operative connection may correspond to a meshing between corresponding gears of the two elements. Further elements, such as shafts, constant velocity joints and/or one or more gear sets, may be present between the elements. For example, the driven shaft may be non-rotatably connected to a rotor shaft of the driving unit. A non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated. The input shaft is configured to receive power from the driven shaft and is non-rotatably connected to the first element of the first planetary gear set for inputting the received power. The input shaft may be configured to receive power from the driven shaft directly or indirectly. The input shaft may be operatively connected to the driven shaft. The input shaft may be permanently non-rotatably connected to the driven shaft, for example by being integrally formed.

The gearing further comprises a first output shaft, a second output shaft, a first drive shaft, a second drive shaft and a stationary member. The second element of the first planetary gear set is non-rotatably connected to the first output shaft for outputting power to the first drive shaft. The third element of the first planetary gear set is non-rotatably connected to the first element of the second planetary gear set. The second element of the second planetary gear set is non-rotatably connected to the stationary member. The third element of the second planetary gear set is non-rotatably connected to the second output shaft for outputting power to the second drive shaft. The first and second output shafts may be arranged coaxially to the input shaft. The drive shafts may be arranged coaxially to the output shafts or offset therefrom. The gearing may be configured to distribute power between the first and second output shafts. The gearing may also comprise a differential function. Each drive shaft of the gearing may be operatively connected to a respective drive element of the vehicle. The drive element may be, for example, a wheel for contacting the ground or a drive wheel or sprocket for tracks. The vehicle may comprise a shiftable transmission disposed in a power flow between the driving unit and the drive elements. The stationary member may be part of a housing. The stationary member may be configured to provide support and to receive forces and torques. The stationary member may be provided as one or several housing portions for enclosing stationary and/or rotational components of the gearing and/or the driving unit. The stationary member may comprise several detachable housing portions. Each housing portion may be configured to accommodate and support different components. The housing portions may be mounted to each other or formed integrally with each other.

The gearing further comprises a reduction unit. The reduction unit is arranged in a power flow from the driving unit to the first and second drive shafts for converting an input rotational speed to a lower output rotational speed. The reduction unit may be configured to provide an operative connection between an input of the reduction unit and an output of the reduction unit and to provide a reduction function for reducing the rotational speed between the input and the output. Further to converting an input rotational speed into a lower output rotational speed, the reduction unit may be configured to convert an input torque into a higher output torque. The reduction unit may comprise one or more gear sets configured to convert torques and rotational speeds from one value to another. The gear set or sets may be formed as straight-cut gears, helical gears, planetary gears, bevel gears or other suitable gears. The reduction unit may comprise other elements for power transmission as part of the operative connection and/or part of the reduction function, for example a chain drive, a belt drive or additional shafts.

With the gearing of the first aspect, a high overall reduction ratio between the rotational speed input by the driving unit and the rotational speed output to the drive shafts can be provided. Accordingly, compared to a gearing without a reduction unit, the gearing of the first aspect makes it possible to provide the vehicle with a driving unit having a higher rotational speed for a given target rotational speed of the drive shafts. This enables a broader range of driving units to be applied to the vehicle with the gearing of the first aspect. In addition, electric motors generally increase in efficiency and decrease in size when the nominal rotational speed is increased for a given nominal power output. Thus, in case an electric motor is used for the driving unit, allowing a higher rotational speed thereof decreases its size and also increases overall efficiency of the vehicle.

In one embodiment, the reduction unit comprises a pre-reduction gear set arranged in a power flow from the driven shaft to the input shaft. Thereby, it is possible to provide the reduction function with a simple and compact gearing. In addition, the reduction function may be provided as a pre-reduction prior to introducing power into the input shaft, namely upstream of the input shaft. As a result, overall rotational speed levels in the gearing downstream of the input shaft are lower, reducing loads in the gearing. Furthermore, a single pre-reduction gear set can be used to provide the reduction function for both drive shafts, thereby further simplifying the structure.

In one embodiment, the pre-reduction gear set comprises a planetary gear stage comprising a first element operatively connected to the driven shaft, a second element operatively connected to the input shaft, and a third element non-rotatably connected to the stationary member. Thereby, a high reduction ratio can be provided. The planetary gear stage of the pre-reduction gear set may be configured in the same manner as the planetary gear sets described in the foregoing, for example by having a sun gear, a planetary carrier and a ring gear as the first, second and third elements. Additional details concerning the configuration of elements and gears of the planetary gear stage will be provided further in the following.

In one embodiment, the reduction unit comprises a first post-reduction gear set arranged in a power flow from the first output shaft to the first drive shaft and a second post-reduction gear set arranged in a power flow from the second output shaft to the second drive shaft. The first post-reduction gear set and the second post-reduction gear set may be configured the same or differently from each other. By providing the reduction function as a post-reduction, namely downstream of the output shafts, the rotational speeds at the input of the post-reduction gear set have already been reduced by the planetary gear sets. As a result, compared to a pre-reduction gear set, a smaller-dimensioned post-reduction gear set may be sufficient for achieving the same overall reduction ratio. It is also possible to provide both a pre-reduction function and a post-reduction function by providing the pre-reduction gear set and the post-reduction gear sets described in the foregoing. Thereby, an even higher overall reduction ratio can be provided.

In one embodiment, at least one of the post-reduction gear sets is formed as a spur gear stage. The spur gear stage may comprise two or more spur gears meshing with each other for power transmission. The spur gears may be formed as straight-cut gears or helical gears, for example. Thereby, a simple structure with few gears and a high efficiency is provided. In one example, both post-reduction gear sets are formed as spur gear stages.

In one embodiment, at least one of the post-reduction gear sets is formed as a planetary gear stage comprising a first element operatively connected to one of the output shafts for receiving power, a second element for outputting power to the respective drive shaft, and a third element non-rotatably connected to the stationary member. Thereby, a high reduction ratio can be provided. The planetary gear stage of the post-reduction gear set or sets may be configured in the same manner as the planetary gear sets described in the foregoing, for example by having a sun gear, a planetary carrier and a ring gear as the first, second and third elements. Additional details concerning the configuration of elements and gears of the planetary gear stage will be provided in the following.

In one embodiment, with respect to a planetary gear stage, the first element is formed as a sun gear, the second element is formed as a planetary carrier, and the third element is formed as a ring gear. The foregoing may be independently applicable to either of the planetary gear stages potentially present in the gearing, namely any pre-reduction planetary gear stage and/or any of the post-reduction planetary gear stages.

In one embodiment, with respect to a planetary gear stage, the first element is formed as a sun gear, the second element is formed as a ring gear, and the third element is formed as a planetary carrier. The foregoing may be independently applicable to either of the planetary gear stages potentially present in the gearing, namely any pre-reduction planetary gear stage and/or any of the post-reduction planetary gear stages.

In one embodiment, the second planetary gear set is arranged outside the first planetary gear set in a radial direction. The radial direction may relate to a radial direction of the input shaft and/or the output shafts. The first and second planetary gear sets may be arranged so as to overlap at least partially with respect to an axial direction. In one example, the first and second planetary gear sets may be arranged in a single plane normal to the axial direction. With the present embodiment, a compact structure of the gearing is provided, especially with respect to the axial direction.

In one embodiment, the second planetary gear set is offset from the first planetary gear set in an axial direction. The axial direction may relate to an axial direction of the input shaft and/or the output shafts. The first and second planetary gear sets may be arranged so as to overlap at least partially with respect to the radial direction. With the present embodiment, a compact structure of the gearing is provided, especially with respect to the radial direction.

In one embodiment, the gearing comprises a parking lock unit configured to selectively inhibit rotation of the drive shafts with respect to the stationary member. The parking lock unit may comprise a shifting element for selectively locking an element of the gearing so as to inhibit rotation of the drive shafts. The element of the gearing may be a part of the planetary gear sets or another rotatable element. The shifting element may be configured to lock the element of the gearing to the stationary member or to another element of the gearing so as to inhibit the rotation of the drive shafts. The shifting element may comprise a clutch, a dog clutch, a braking element or other means for selectively allowing and inhibiting relative rotation. The parking lock unit may comprise an actuation device for operating the shifting element. The actuation device may be configured to operate the shifting element electrically, electromechanically, hydraulically and/or pneumatically. In one embodiment, the parking lock unit is configured to selectively lock the first element of the first planetary gear set to the stationary member. In one embodiment, the parking lock unit is configured to selectively lock the first element of the first planetary gear set to the third element of the pre-reduction gear set.

In a second aspect, the present disclosure relates to a drive axle. The drive axle comprises a gearing according to the first aspect and a driving unit for driving the driven shaft of the gearing. The drive axle may be configured to convert stored power, for example electrical power, via the driving unit, for example an electrical motor, and the gearing into mechanical power for driving the vehicle. The driving unit, the input shaft and the output shafts may be arranged coaxially. The drive axle may be provided as an axle of the vehicle, for example a front axle or a rear axle of the vehicle. The respective advantages and further features can be taken from the description of the first aspect, wherein embodiments of the first aspect also form embodiments of the second aspect and vice versa.

In a third aspect, the present disclosure relates to a vehicle. The vehicle comprises a gearing according to the first aspect or a drive axle according to the second aspect. The respective advantages and further features can be taken from the descriptions of the first or second aspect, wherein embodiments of the first or second aspect also form embodiments of the third aspect and vice versa.

### Brief description of drawings

Figure 1 shows a vehicle with a drive axle and a gearing according to an embodiment of the present disclosure.
Figure 2 schematically shows a general layout of the gearing of Figure 1.
Figure 3 schematically shows a drive axle with a gearing according to an embodiment.
Figure 4 schematically shows a drive axle with a gearing according to an embodiment.
Figure 5 schematically shows a drive axle with a gearing according to an embodiment.
Figure 6 schematically shows a drive axle with a gearing according to an embodiment.
Figure 7 schematically shows a drive axle with a gearing according to an embodiment.
Figure 8 schematically shows a drive axle with a gearing according to an embodiment.
Figure 9 schematically shows a drive axle with a gearing according to an embodiment.
Figure 10 schematically shows a drive axle with a gearing according to an embodiment.
Figure 11 schematically shows a drive axle with a gearing according to an embodiment.
Figure 12 schematically shows a drive axle with a gearing according to an embodiment.
Figure 13 schematically shows a drive axle with a gearing according to an embodiment.
Figure 14 schematically shows a drive axle with a gearing according to an embodiment.
Figure 15 schematically shows a drive axle with a gearing according to an embodiment.

### Detailed description of embodiments

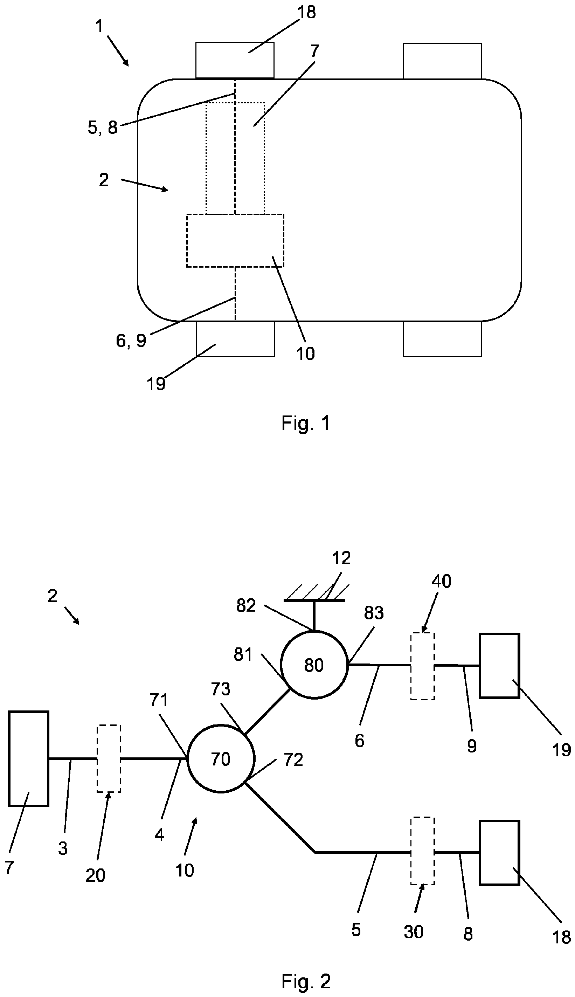

Figure 1 shows a vehicle 1 with a gearing 10 according to an embodiment of the present disclosure. The vehicle 1 comprises a driving unit 7 presently formed as an electric motor. The gearing 10 and the driving unit 7 presently form a drive axle 2 of the vehicle 1. The gearing 10 is configured for transferring power input by the driving unit 7 via output shafts 5, 6 and drive shafts 8, 9 to two drive elements 18, 19 presently formed as wheels.

Figure 2 schematically shows a general layout of the gearing 10 according to an embodiment of the present disclosure. In the present embodiment, the gearing 10 is formed as a distribution gearing with two planetary gear sets. As can be seen from Figure 2, the gearing 10 comprises a first planetary gear set 70 having a first element 71, a second element 72 and a third element 73. Furthermore, the gearing 10 comprises a second planetary gear set 80 having a first element 81, a second element 82 and a third element 83. Power generated by the driving unit 7 can be introduced into the gearing 10 via a driven shaft 3 and an input shaft 4. An optional pre-reduction gear set 20 is arranged between the driven shaft 3 and the input shaft 4. The input shaft 4 is operatively connected to the first element 71 of the first planetary gear set 70, here by being permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member 12, here a housing for accommodating and supporting the first and second planetary gear sets 70, 80. A first output shaft 5 is operatively connected to the second element 72 of the first planetary gear set 70, in this case permanently non-rotatably connected, for outputting power to a first drive element 18. The power to the first drive element 18 is transferred from the first output shaft 5 via an optional first post-reduction gear set 30 and a first drive shaft 8. A second output shaft 6 is operatively connected to the third element 83 of the second planetary gear set 80, in this case permanently non-rotatably connected, for outputting power to a second drive element 19. The power to the second drive element 19 is output from the second output shaft 6 via an optional second post-reduction gear set 40 and a second drive shaft 9.

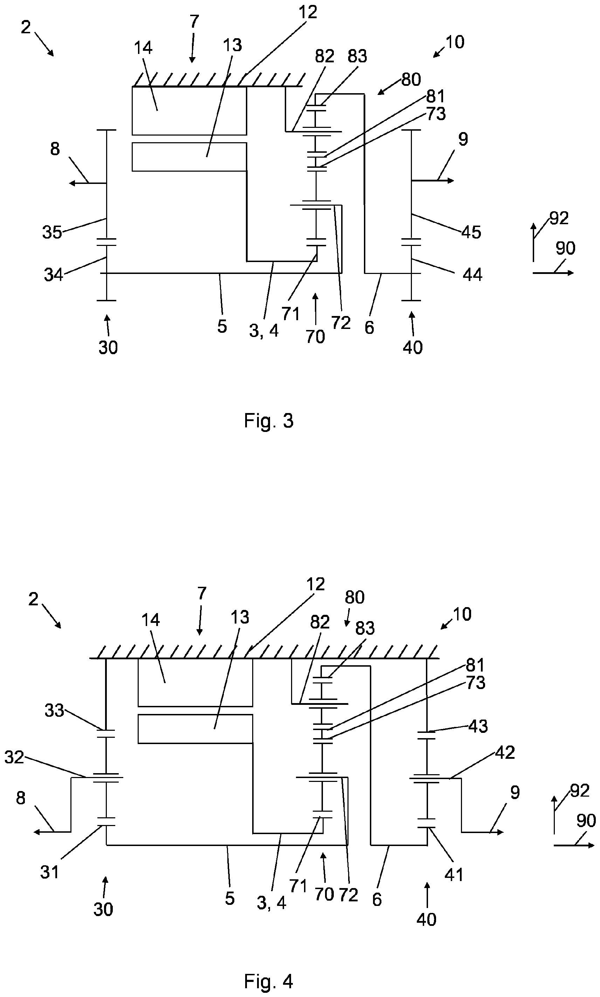

Figure 3 shows a drive axle 2 with a gearing 10 according to an embodiment of the present disclosure. The drive axle 2 comprises a driving unit 7 with a rotor 13 and a stator 14 fixed to a stationary member 12. The rotor 13 is permanently non-rotatably connected to a driven shaft 3 of the gearing 10. The gearing 10 of the present embodiment is configured according to the layout of Figure 2 and is configured to distribute power from an input shaft 4 to a first output shaft 5 and a second output shaft 6. The input shaft 4 is presently non-rotatably connected to the driven shaft 3, here by being integrally formed. The gearing 10 comprises a first planetary gear set 70 with first, second and third elements 71, 72, 73 and a second planetary gear set 80 with first, second and third elements 81, 82, 83. Each first element 71, 81 of the planetary gear sets 70, 80 is presently formed as a sun gear, each second element 72, 82 of the planetary gear sets 70, 80 is presently formed as a planetary carrier, and each third element 73, 83 of the planetary gear sets 70, 80 is presently formed as a ring gear. In the present embodiment, the planetary gear sets 70, 80 are provided in the same plane along an axial direction 90, and the second planetary gear set 80 is arranged outside the first planetary gear set 70 in a radial direction 92.

In the present embodiment, the gearing 10 comprises a first post-reduction gear set 30 and a second post-reduction gear set 40. The first post-reduction gear set 30 is arranged between the first output shaft 5 and a first drive shaft 8. The first post-reduction gear set 30 is presently formed as a spur gear stage comprising a pair of spur gears 34, 35. The spur gears 34, 35 are provided so as to reduce the rotational speed input by the first output shaft 5 to a lower rotational speed output to the first drive shaft 8. The second post-reduction gear set 40 is arranged between the second output shaft 6 and a second drive shaft 9. The second post-reduction gear set 40 is presently formed as a spur gear stage comprising a pair of spur gears 44, 45. The spur gears 44, 45 are provided so as to reduce the rotational speed input by the second output shaft 6 to a lower rotational speed output to the second drive shaft 9.

With the drive axle 2 and specifically the gearing 10 of the present embodiment, it is possible to provide a high reduction ratio from the driving unit 7 to the drive elements 18, 19. Accordingly, a driving unit 7, e.g. an electric motor, having a compact design can be combined with the gearing 10 of the present embodiment.

Figure 4 shows a drive axle 2 with a gearing 10 according to an embodiment of the present disclosure. The gearing 10 of Figure 4 is configured identical to the gearing 10 of Figure 3 except for the following differences. While the gearing 10 of Figure 3 comprises the post-reduction gear sets 30, 40 formed as spur gear stages, the gearing 10 of Figure 4 comprises a first post-reduction gear set 30 and a second post-reduction gear set 40 each formed as a planetary gear stage. Accordingly, the first post-reduction gear set 30 comprises a first element 31 non-rotatably connected as input to the first output shaft 5, a second element 32 non-rotatably connected as output to the first drive shaft 8, and a third element 33 fixed to the stationary member 12. Likewise, the second post-reduction gear set 40 comprises a first element 41 non-rotatably connected as input to the second output shaft 6, a second element 42 non-rotatably connected as output to the second drive shaft 9, and a third element 43 fixed to the stationary member 12. In the present embodiment, each first element 31, 41 of the post-reduction gear sets 30, 40 is formed as a sun gear, each second element 32, 42 of the post-reduction gear sets 30, 40 is formed as a planetary carrier, and each third element 33, 43 of the post-reduction gear sets 30, 40 is formed as a ring gear.

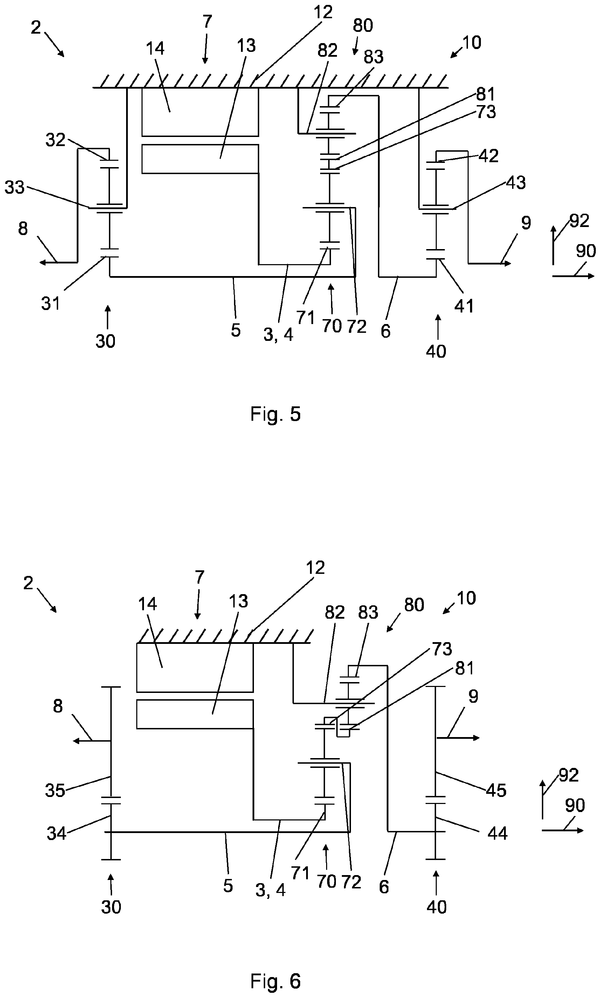

Figure 5 shows a drive axle 2 with a gearing 10 according to an embodiment of the present disclosure. The gearing 10 of Figure 5 is configured identical to the gearing 10 of Figure 4 except for the following difference. In the present embodiment, each first element 31, 41 of the post-reduction gear sets 30, 40 is formed as a sun gear, each second element 32, 42 of the post-reduction gear sets 30, 40 is formed as a ring gear, and each third element 33, 43 of the post-reduction gear sets 30, 40 is formed as a planetary carrier.

Figure 6 shows a drive axle 2 with a gearing 10 according to an embodiment of the present disclosure. The gearing 10 of Figure 6 is configured identical to the gearing 10 of Figure 3 except for the following difference. In the embodiment of Figure 3, the planetary gear sets 70, 80 are provided in the same plane along the axial direction 90, and the second planetary gear set 80 is arranged outside the first planetary gear set 70 in the radial direction 92. By contrast, in the present embodiment, the second planetary gear set 80 is offset from the first planetary gear set 70 in the axial direction 90, and the planetary gear sets 70, 80 partly overlap each other in the radial direction 92. Thereby, a compact structure in the radial direction 92 is provided.

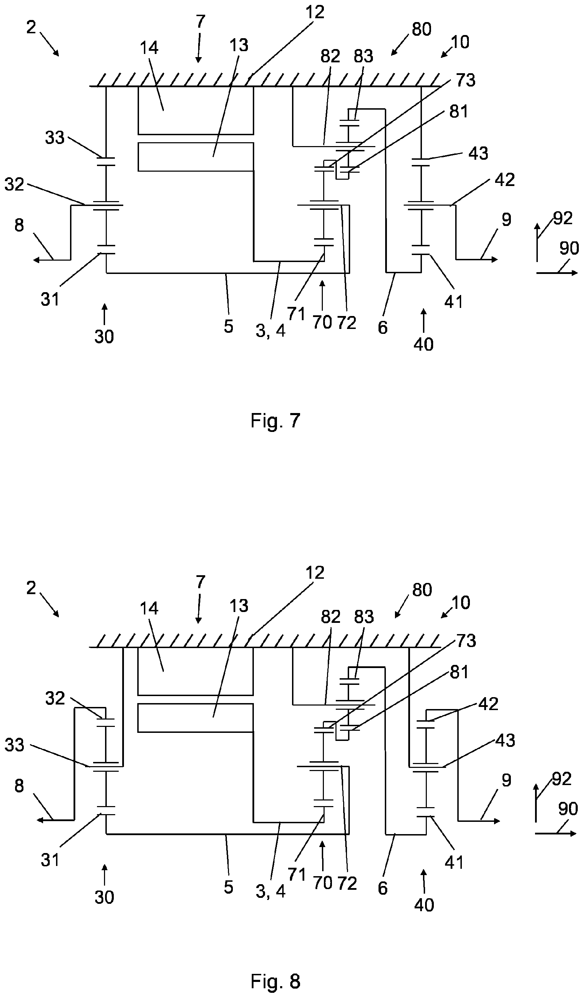

Figure 7 shows a drive axle 2 with a gearing 10 according to an embodiment of the present disclosure. The gearing 10 of Figure 7 is configured identical to the gearing 10 of Figure 4 except for the following difference. In the embodiment of Figure 4, the planetary gear sets 70, 80 are provided in the same plane along the axial direction 90, and the second planetary gear set 80 is arranged outside the first planetary gear set 70 in the radial direction 92. By contrast, in the present embodiment, the second planetary gear set 80 is offset from the first planetary gear set 70 in the axial direction 90, and the planetary gear sets 70, 80 overlap each other slightly in the radial direction 92.

Figure 8 shows a drive axle 2 with a gearing 10 according to an embodiment of the present disclosure. The gearing 10 of Figure 8 is configured identical to the gearing 10 of Figure 5 except for the following difference. In the embodiment of Figure 5, the planetary gear sets 70, 80 are provided in the same plane along the axial direction 90, and the second planetary gear set 80 is arranged outside the first planetary gear set 70 in the radial direction 92. By contrast, in the present embodiment, the second planetary gear set 80 is offset from the first planetary gear set 70 in the axial direction 90, and the planetary gear sets 70, 80 overlap each other slightly in the radial direction 92.

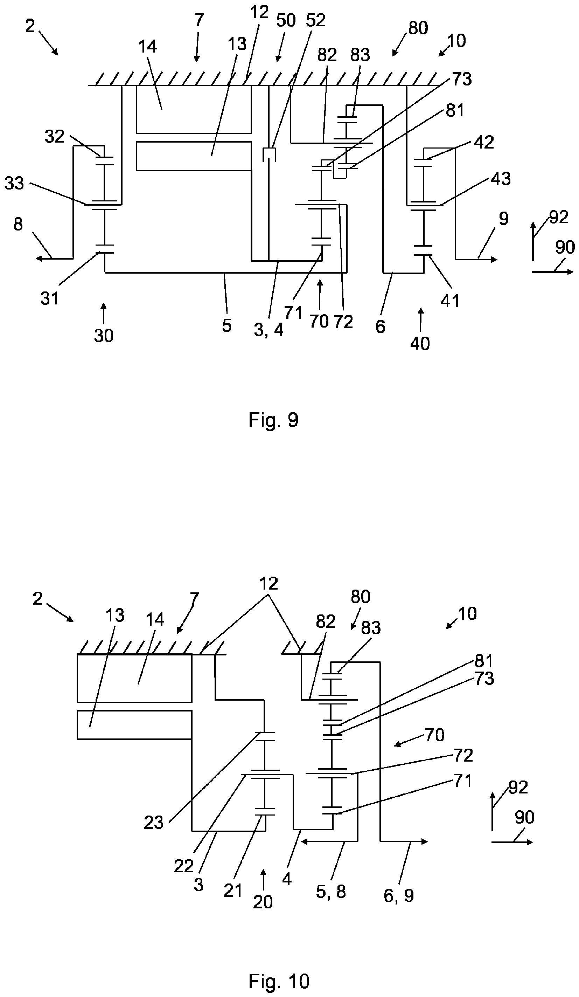

Figure 9 shows a drive axle 2 with a gearing 10 according to an embodiment of the present disclosure. The gearing 10 of Figure 9 is configured identical to the gearing 10 of Figure 8 except for the following difference. The gearing 10 of Figure 9 comprises an optional parking lock unit 50 for inhibiting rotation of the drive shafts 8, 9 with respect to the stationary member 12. For this purpose, the parking lock unit 50 presently comprises a shifting element 52 configured to selectively establish a non-rotatable connection between the input shaft 4 and the stationary member 12. Accordingly, by means of operating the shifting element 52 to a locked state, rotation of the input shaft 4 and thus the drive shafts 8, 9 can be selectively locked.

Figure 10 shows a drive axle 2 with a gearing 10 according to an embodiment of the present disclosure. The gearing 10 of Figure 10 is configured identical to the gearing 10 of Figure 3 except for the following differences. While the gearing 10 of Figure 3 comprises the pair of post-reduction gear sets 30, 40, the gearing 10 of Figure 10 comprises a single pre-reduction gear set 20. In the present embodiment, the pre-reduction gear set 20 is formed as a planetary gear stage. Accordingly, the pre-reduction gear set 20 comprises a first element 21 non-rotatably connected as input to the driven shaft 3, a second element 22 non-rotatably connected as output to the input shaft 4, and a third element 23 fixed to the stationary member 12. In the present embodiment, the first element 21 of the pre-reduction gear set 20 is formed as a sun gear, the second element 22 of the pre-reduction gear set 20 is formed as a planetary carrier, and the third element 23 of the pre-reduction gear set 20 is formed as a ring gear.

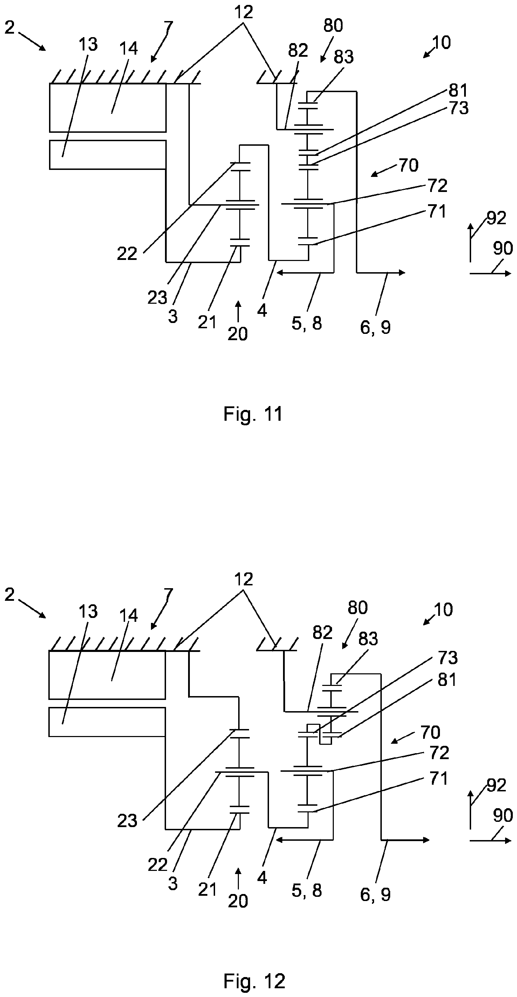

Figure 11 shows a drive axle 2 with a gearing 10 according to an embodiment of the present disclosure. The gearing 10 of Figure 11 is configured identical to the gearing 10 of Figure 10 except for the following difference. In the present embodiment, the first element 21 of the pre-reduction gear set 20 is formed as a sun gear, the second element 22 of the pre-reduction gear set 20 is formed as a ring gear, and the third element 23 of the pre-reduction gear set 20 is formed as a planetary carrier.

Figure 12 shows a drive axle 2 with a gearing 10 according to an embodiment of the present disclosure. The gearing 10 of Figure 12 is configured identical to the gearing 10 of Figure 10 except for the following difference. In the embodiment of Figure 10, the planetary gear sets 70, 80 are provided in the same plane along the axial direction 90, and the second planetary gear set 80 is arranged outside the first planetary gear set 70 in the radial direction 92. By contrast, in the present embodiment, the second planetary gear set 80 is offset from the first planetary gear set 70 in the axial direction 90, and the planetary gear sets 70, 80 overlap each other slightly in the radial direction 92.

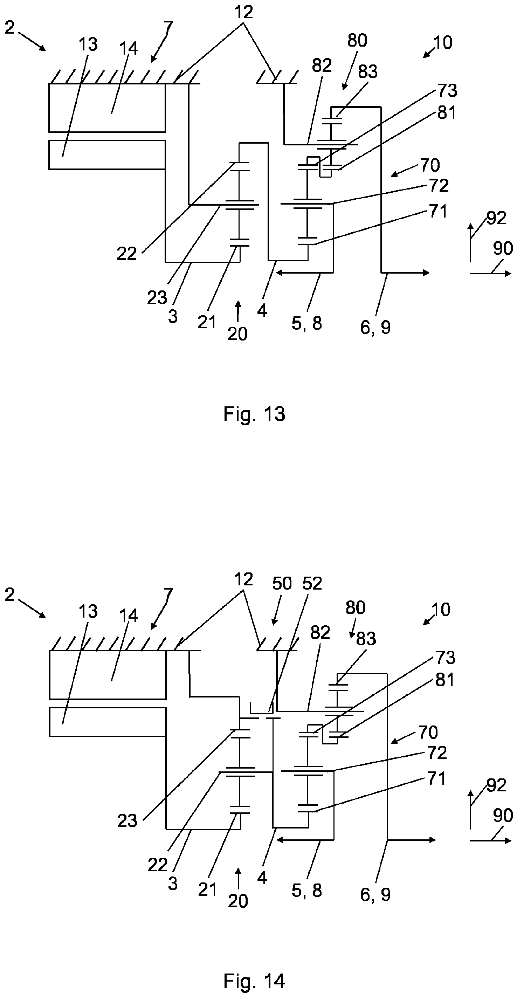

Figure 13 shows a drive axle 2 with a gearing 10 according to an embodiment of the present disclosure. The gearing 10 of Figure 13 is configured identical to the gearing 10 of Figure 11 except for the following difference. In the embodiment of Figure 11, the planetary gear sets 70, 80 are provided in the same plane along the axial direction 90, and the second planetary gear set 80 is arranged outside the first planetary gear set 70 in the radial direction 92. By contrast, in the present embodiment, the second planetary gear set 80 is offset from the first planetary gear set 70 in the axial direction 90, and the planetary gear sets 70, 80 overlap each other slightly in the radial direction 92.

Figure 14 shows a drive axle 2 with a gearing 10 according to an embodiment of the present disclosure. The gearing 10 of Figure 14 is configured identical to the gearing 10 of Figure 12 except for the following difference. The gearing 10 of Figure 14 comprises an optional parking lock unit 50 for inhibiting rotation of the drive shafts 8, 9 with respect to the stationary member 12. For this purpose, the parking lock unit 50 presently comprises a shifting element 52 configured to selectively establish a non-rotatable connection of the input shaft 4 and the second element 22 of the pre-reduction gear set 20 with the third element 23 of the pre-reduction gear set 20, which in turn is fixed to the stationary member 12. Accordingly, by means of operating the shifting element 52 to a locked state, the pre-reduction gear set 20 is blocked and locked to the stationary member 12 such that rotation of the input shaft 4 and thus the drive shafts 8, 9 can be selectively locked.

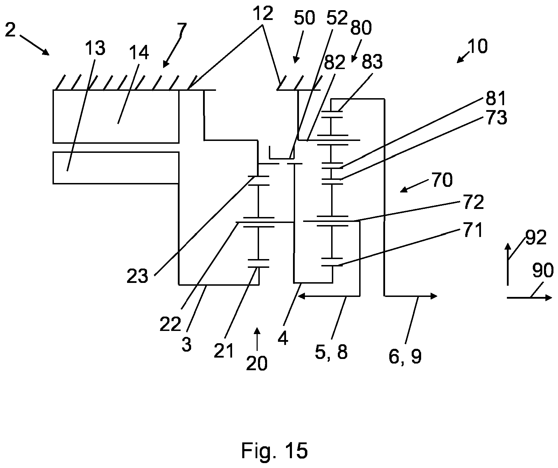

Figure 15 shows a drive axle 2 with a gearing 10 according to an embodiment of the present disclosure. The gearing 10 of Figure 15 is configured identical to the gearing 10 of Figure 10 except for the following difference. The gearing 10 of Figure 15 comprises an optional parking lock unit 50 for inhibiting rotation of the drive shafts 8, 9 with respect to the stationary member 12. For this purpose, the parking lock unit 50 presently comprises a shifting element 52 configured to selectively establish a non-rotatable connection of the input shaft 4 and the second element 22 of the pre-reduction gear set 20 with the third element 23 of the pre-reduction gear set 20, which in turn is fixed to the stationary member 12. Accordingly, by means of operating the shifting element 52 to a locked state, rotation of the input shaft 4 and thus the drive shafts 8, 9 can be selectively locked.

With all of the embodiments described in the foregoing, a gearing 10 with a high reduction ratio is provided. In these embodiments, either a pre-reduction gear set 20 or a pair of post-reduction gear sets 30, 40 is provided. In a non-illustrated further embodiment, a combination of a pre-reduction gear set with a pair of post-reduction gear sets is provided. With this further embodiment, an even higher reduction ratio is provided.

### Reference signs

- 1: vehicle
- 2: drive axle
- 3: driven shaft
- 4: input shaft
- 5, 6: output shaft
- 7: driving unit
- 8, 9: drive shaft
- 10: gearing
- 12: stationary member
- 13: stator
- 14: rotor
- 18, 19: drive element
- 20: pre-reduction gear set
- 21, 31, 41, 71, 81: first element
- 22, 32, 42, 72, 82: second element
- 23, 33, 43, 73, 83: third element
- 30, 40: post-reduction gear set
- 34, 35, 44, 45: spur gear
- 50: parking lock unit
- 52: shifting element
- 70, 80: planetary gear set
- 90: axial direction
- 92: radial direction

## Claims

1. A gearing (10) for a vehicle (1) with a driving unit (7), the gearing (10) comprising a first planetary gear set (70), a second planetary gear set (80), a driven shaft (3) for receiving power from the driving unit (7), an input shaft (4), a first output shaft (5), a second output shaft (6), a first drive shaft (8), a second drive shaft (9), a stationary member (12) and a reduction unit, wherein the first planetary gear set (70) comprises at least a first element (71), a second element (72) and a third element (73) and the second planetary gear set (80) comprises at least a first element (81), a second element (82) and a third element (83), the input shaft (4) is configured to receive power from the driven shaft (3) and is non-rotatably connected to the first element (71) of the first planetary gear set (70) for inputting the received power, the second element (72) of the first planetary gear set (70) is non-rotatably connected to the first output shaft (5) for outputting power to the first drive shaft (8), the third element (73) of the first planetary gear set (70) is non-rotatably connected to the first element (81) of the second planetary gear set (80), the second element (82) of the second planetary gear set (80) is non-rotatably connected to the stationary member (12), and the third element (83) of the second planetary gear set (80) is non-rotatably connected to the second output shaft (6) for outputting power to the second drive shaft (9), and wherein the reduction unit is arranged in a power flow from the driving unit (7) to the first and second drive shafts (8, 9) for converting an input rotational speed to a lower output rotational speed.

2. The gearing (10) according to claim 1, **characterized in that** the reduction unit comprises a pre-reduction gear set (20) arranged in a power flow from the driven shaft (3) to the input shaft (4).

3. The gearing (10) according to claim 2, **characterized in that** the pre-reduction gear set (20) comprises a planetary gear stage comprising a first element (21) operatively connected to the driven shaft (3), a second element (22) operatively connected to the input shaft (4), and a third element (23) non-rotatably connected to the stationary member (12).

4. The gearing (10) according to any one of the preceding claims, **characterized in that** the reduction unit comprises a first post-reduction gear set (30) arranged in a power flow from the first output shaft (5) to the first drive shaft (8) and a second post-reduction gear set (40) arranged in a power flow from the second output shaft (6) to the second drive shaft (9).

5. The gearing (10) according to claim 4, **characterized in that** at least one of the post-reduction gear sets (30, 40) is formed as a spur gear stage.

6. The gearing (10) according to claim 4, **characterized in that** at least one of the post-reduction gear sets (30, 40) is formed as a planetary gear stage comprising a first element (31; 41) operatively connected to one of the output shafts (5; 6) for receiving power, a second element (32; 42) for outputting power to the respective drive shaft (8; 9), and a third element (33; 43) non-rotatably connected to the stationary member (12).

7. The gearing (10) according to claim 3 or claim 6, **characterized in that**, with respect to a planetary gear stage (20; 30; 40), the first element (21; 31; 41) is formed as a sun gear, the second element (22; 32; 42) is formed as a planetary carrier, and the third element is formed (23; 33; 43) as a ring gear.

8. The gearing (10) according to claim 3 or claim 6, **characterized in that**, with respect to a planetary gear stage (20; 30; 40), the first element (21; 31; 41) is formed as a sun gear, the second element (22; 32; 42) is formed as a ring gear, and the third element (23; 33; 43) is formed as a planetary carrier.

9. The gearing (10) according to any one of the preceding claims, **characterized in that** the second planetary gear set (80) is arranged outside the first planetary gear set (70) in a radial direction (92).

10. The gearing (10) according to any one of the preceding claims, **characterized in that** the second planetary gear set (80) is offset from the first planetary gear set (70) in an axial direction (90).

11. The gearing (10) according to any one of the preceding claims, **characterized by** comprising a parking lock unit (50) configured to selectively inhibit rotation of the drive shafts (8, 9) with respect to the stationary member (12).

12. The gearing (10) according to claim 11, **characterized in that** the parking lock unit (50) is configured to selectively lock the first element (71) of the first planetary gear set (70) to the stationary member (12).

13. The gearing (10) according to claim 3 and claim 11, **characterized in that** the parking lock unit (50) is configured to selectively lock the first element (71) of the first planetary gear set (70) to the third element (23) of the pre-reduction gear set (20).

14. A drive axle (2) comprising a gearing (10) according to any one of the preceding claims and a driving unit (7) for driving the driven shaft (3) of the gearing (10).

15. A vehicle (1) comprising a gearing (10) according to any one of claims 1 to 13 or a drive axle (2) according to claim 14.
